# EUROPÄISCHE PATENTSCHRIFT

(11) **EP 1 530 809 B1**
(45) Veröffentlichungstag und Bekanntmachung des Hinweises auf die Patenterteilung: **03.09.2014**
(21) Anmeldenummer: 03790793.8
(22) Anmeldetag: 08.07.2003
(51) Int. Cl.: H01M 2/16, C08J 7/06, D06M 11/45, D06M 11/48, D06M 11/79, D06M 13/513, D06M 15/227, D06M 23/08, H01M 2/14, H01M 10/0525

(54) **ELEKTRISCHER SEPARATOR MIT ABSCHALTMECHANISMUS, VERFAHREN ZU DESSEN HERSTELLUNG UND VERWENDUNG IN LITHIUM-BATTERIEN**
ELECTRIC SEPARATOR COMPRISING A SHUT-DOWN MECHANISM, METHOD FOR THE PRODUCTION THEREOF AND ITS USE IN LITHIUM BATTERIES
SEPARATEUR ELECTRIQUE A MECANISME D'ARRET, SON PROCEDE DE PRODUCTION ET SON UTILISATION DANS DES BATTERIES AU LITHIUM

(30) Priorität: 24.08.2002 DE 10238945
(43) Veröffentlichungstag der Anmeldung: 18.05.2005
(73) Patentinhaber: Evonik Degussa GmbH, 45128 Essen (DE)
(72) Erfinder: HENNIGE, Volker, 48249 Dülmen (DE); HYING, Christian, 46414 Rhede (DE); HÖRPEL, Gerhard, 48301 Nottuln (DE)
(74) Vertreter: Tostmann, Holger Carl
(86) Internationale Anmeldenummer: PCT/EP2003/007335
(87) Internationale Veröffentlichungsnummer: WO 2004/021469

(56) Entgegenhaltungen:
- EP-A- 0 951 080
- WO-A-91/19326
- WO-A-2004/021499
- DE-A1- 3 302 535
- DE-A1- 19 918 856
- DATABASE WPI Section Ch, Week 199743 Derwent Publications Ltd., London, GB; Class A85, AN 1997-468159 XP002288863 & JP 09 219185 A (SUMITOMO ELECTRIC IND CO) 19. August 1997 (1997-08-19)
- DATABASE WPI Section Ch, Week 199817 Derwent Publications Ltd., London, GB; Class A17, AN 1998-020805 XP002288864 & JP 10 044348 A (TONEN KAGAKU KK) 17. Februar 1998 (1998-02-17)

## Beschreibung

Die vorliegende Erfindung betrifft elektrische Separatoren, die einen Abschaltmechanismus aufweisen, ein Verfahren zu deren Herstellung sowie deren Verwendung in Batterien, insbesondere in Lithium-Batterien.

Ein elektrischer Separator ist ein Separator, der in Batterien und anderen Anordnungen, in denen Elektroden, z. B. unter Aufrechterhaltung von Ionenleitfähigkeit, voneinander separiert werden müssen, eingesetzt wird.

Der Separator ist üblicherweise ein dünner, poröser, isolierender Stoff mit hoher Ionendurchlässigkeit, guter mechanischer Festigkeit und Langzeitstabilität gegen die im System, z. B. im Elektrolyten der Batterie, verwendeten Chemikalien und Lösungsmittel. Er soll in Batterien die Kathode von der Anode elektronisch völlig isolieren aber für den Elektrolyten durchlässig sein. Außerdem muss er dauerelastisch sein und den Bewegungen im System, z. B. im Elektrodenpaket beim Laden und Entladen, folgen.

Der Separator bestimmt maßgeblich die Lebensdauer der Anordnung, in der er verwendet wird, z. B. die von Batterie-Zellen. Die Entwicklung wiederaufladbarer Batterien wird daher durch die Entwicklung geeigneter Separatormaterialien geprägt.

Allgemeine Informationen über elektrische Separatoren und Batterien können z. B. bei J.O. Besenhard in "Handbook of Battery Materials" (VCH-Verlag, Weinheim 1999) nachgelesen werden.

Derzeitig eingesetzte Separatoren bestehen überwiegend aus porösen organischen Polymerfilmen bzw. aus anorganischen Vliesstoffen, wie z. B. Vliesen aus Glas- oder Keramik-Materialien oder auch Keramikpapieren. Diese werden von verschiedenen Firmen hergestellt. Wichtige Produzenten sind hier: Celgard, Tonen, Ube, Asahi, Binzer, Mitsubishi, Daramic und andere. Ein typischer organischer Separator besteht z. B. aus Polypropylen oder aus einem Polypropylen/Polyethylen/Polypropylen-Verbund.

Die heute häufig verwendeten Lithium-Batterien zeichnen sich im Vergleich zu Systemen mit wässrigen Elektrolyten, wie etwa NiCd-Batterien oder Nickel-Metallhydrid-Batterien, durch viele Vorteile, wie z. B. hohe spezifische Energiedichte, keine Selbstentladung und kein Memoryeffekt aus. Lithium-Batterien besitzen aber den Nachteil, dass sie einen brennbaren Elektrolyten enthalten, der zudem sehr heftig mit Wasser reagieren kann. Für Hochenergiebatterien, d. h. Batterien die viel Aktivmaterial enthalten, ist es deshalb sehr wichtig, dass im Falle eines Unfalls und einer damit einhergehenden Erwärmung der Zelle der Stromkreis in der Batterie unterbrochen wird. Dies erfolgt üblicherweise durch spezielle Separatoren, die aus einem Verbund aus Polypropylen(PP)-Polyethylen(PE)-PP bestehen. Ab einer bestimmten Temperatur, der Abschalttemperatur (shut down Temperatur), schmilzt das PE auf und die Poren des Separators werden verschlossen und der Stromkreis wird unterbrochen.

Nachteilig an diesen Separatoren ist die begrenzte thermische Stabilität, denn bei einer weiteren Erwärmung der Zelle schmilzt auch das Polypropylen, so dass es bei dieser Durchbrenntemperatur (melt down Temperatur) zu einem Aufschmelzen des gesamten Separators und somit zu einem großflächigen inneren Kurzschluss kömmt, der häufig unter Feuerschein oder sogar Explosion zur Zerstörung der Batteriezelle führt. Nun sind zwar keramische Separatoren, wie z. B. Keramikpapiere oder Keramikvliese oder -gewebe bekannt, die den Effekt des Durchbrennens (melt down) nicht zeigen, diese zeigen leider aber auch keinen Abschalt(shut down)-Effekt, der insbesondere für Hochenergieanwendungen aber unverzichtbar ist und von Batterieherstellern gefordert wird.

Separatoren oder als Separatoren einsetzbare Membranen ohne Abschaltpartikel sind hinlänglich, z. B. aus WO 99/15262 bekannt. Aus dieser Schrift kann auch die Herstellung von Separatoren oder Membranen, die als Separatoren geeignet sind, entnommen werden. Vorzugsweise werden als poröse Träger für die erfindungsgemäßen Separatoren allerdings keine elektrisch leitfähigen Träger wie z. B. Metallgewebe eingesetzt, da es bei der Verwendung solcher Träger zu inneren Kurzschlüssen kommen kann, wenn die keramische Beschichtung des Trägers nicht vollständig ist. Erfindungsgemäße Separatoren weisen deshalb bevorzugt Träger aus nicht elektrisch leitfähigen Materialien auf.

In neuster Zeit sind hybride Separatoren entwickelt worden, die Keramiken und Polymere aufweisen. In DE 102 08 277 wurden Separatoren basierend auf polymeren Substratmaterialien hergestellt, die eine poröse, elektrisch isolierende, keramische Beschichtung aufweisen. Trotz des vorhandenen polymeren Bestandteils zeigen diese Separatoren keinen Abschalteffekt wenn bestimmte Temperaturen überschritten wurden, da vermutlich nicht alle Poren geschlossen wurden.

Es war deshalb Aufgabe der vorliegenden Erfindung Separatoren bereitzustellen, die einen geeigneten Abschaltmechanismus aufweisen und mit denen gleichzeitig ein Durchbrennen der Batteriezelle verhindert werden kann. Diese Separatoren sollten außerdem für den Einsatz in Lithium-Hochleistungs- und -hochenergiebatterien geeignet sein und deshalb eine hohe Porosität und eine möglichst geringe Dicke aufweisen und gleichzeitig mechanisch, thermisch und chemisch möglichst stabil sein.

Überraschenderweise wurde gefunden, dass Separatoren, die auf einer auf einen Träger aufgebrachten keramischen Schicht basieren, und die auf dieser keramischen Schicht eine Beschichtung mit Partikeln, die bei einer gewünschten Abschalttemperatur schmelzen, sogenannte Abschaltpartikel, wie z. B. Wachs- oder Polymerpartikeln, aufweist, hervorragend zum Einsatz in Lithium-Batterien geeignet sind, da sie ein Durchbrennen der Batterie verhindern und gleichzeitig einen Abschaltmechanismus aufweisen. Je nach verwendetem Substrat können solche Separatoren außerdem flexibel und extrem dünn sein. Durch Anpassung der keramischen Partikel und der Abschaltpartikel an die Dicke und Porengröße des Trägers sind Separatoren mit sehr hoher Porosität erhältlich.

Gegenstand der vorliegenden Erfindung sind deshalb Separatoren mit Abschaltfunktion für Batterien umfassend einen porösen Träger mit einer auf und in diesem Träger befindlichen porösen anorganischen (keramischen), nicht elektrisch leitfähigen Beschichtung, wie diese in Anspruch 1 definiert ist.

Ebenfalls Gegenstand der vorliegenden Erfindung ist ein Verfahren zur Herstellung von erfindungsgemäßen Separatoren, welches dadurch gekennzeichnet ist, dass auf eine poröse anorganische Schicht eines Separators Partikel aufgebracht und fixiert werden, die eine definierte, gewünschte Schmelztemperatur aufweisen.

Außerdem ist Gegenstand der vorliegenden Erfindung die Verwendung von erfindungsgemäßen Separatoren in Batterien, insbesondere Lithiumbatterien sowie die Batterien selbst, die einen solchen erfindungsgemäßen Separator aufweisen.

Die erfindungsgemäßen Separatoren, die einen porösen Träger mit einer auf und in diesem Träger befindlichen porösen anorganischen, nicht elektrisch leitfähigen Beschichtung, und eine auf der anorganischen Beschichtung eine mit dieser Schicht verbundene Abschaltschicht aus Partikeln, sogenannten Abschaltpartikeln, die bei einer vorgegebenen Temperatur schmelzen, aufweisen, haben den Vorteil, dass sie hervorragende Sicherheitseigenschaften aufweisen. So weisen diese erfindungsgemäßen Separatoren einen Abschaltmechanismus (shut-down) Mechanismus auf, der darauf basiert, dass die Abschaltpartikel beim Erreichen einer vorgegebenen Temperatur schmelzen und den Separator auf diese Weise verschließen, in dem das Material der Abschaltpartikel in die Poren des anorganischen Materials eindringt und diese verschließt. Zum sogenannten Melt-Down (Durchbrennen) kann es bei dem erfindungsgemäßen Separator dagegen nicht kommen, da auch bei höheren Temperaturen die anorganische Schicht einen großflächigen Kurzschluss innerhalb der Batterie verhindert. Die erfindungsgemäßen Separatoren erfüllen also die Anforderungen nach einer von verschiedenen Batterieherstellern geforderten Sicherheitsabschaltung durch den Shut-Down in den Batteriezellen. Die anorganischen Partikel sorgen dafür, dass es niemals zu einem Melt-Down kommen kann. Somit ist sichergestellt, dass es keine Betriebszustände gibt, in denen ein großflächiger Kurzschluss entstehen kann.

Durch eine geeignete Wahl der Abschaltpartikel, insbesondere der Größe der Abschaltpartikel, wird die Porosität und damit die Leistungsfähigkeit des Separators nicht oder nur in vernachlässigbarem Maße verringert.

Auch bei einem inneren Kurzschluss, der z. B. durch einen Unfall verursacht wurde, ist der erfindungsgemäße Separator sehr sicher. Würde sich z. B. ein Nagel durch eine Batterie bohren, geschieht je nach Separator folgendes: Der Polymerseparator würde an der Durchdringungsstelle (Ein Kurzschlussstrom fließt über den Nagel und heizt diesen auf) schmelzen und sich zusammenziehen. Dadurch wird die Kurzschlussstelle immer größer und die Reaktion gerät außer Kontrolle. Bei dem erfindungsgemäßen Separator schmelzen die polymeren Abschaltpartikel, nicht aber das anorganische Separatormaterial. Somit läuft die Reaktion im Inneren der Batteriezelle nach einem solchen Unfall sehr viel moderater ab. Diese Batterie ist somit deutlich sicherer als eine mit Polymerseparator. Dies kommt vor allem im mobilen Bereich zum Tragen.

Die Vorteile des erfindungsgemäßen Separators für den Einsatz in Lithium-Ionen-Batterien lassen sich wie folgt zusammenfassen:
◆ Hohe Porosität
◆ Ideale Porenweite
◆ Geringe Dicke
◆ Geringes Flächengewicht
◆ Sehr gutes Benetzungsverhalten
◆ Hohe Sicherheit, d. h. kein melt-down aber ein shut-down-Effekt

Der erfindungsgemäße Separator und ein Verfahren zu seiner Herstellung wird im Folgenden beschrieben, ohne dass die Erfindung auf diese Ausführungsarten beschränkt sein soll.

Der erfindungsgemäße Separator mit Abschaltfunktion für Batterien umfassend einen porösen Träger mit einer auf diesem Träger befindlichen porösen anorganischen, nicht elektrisch leitfähigen Beschichtung, zeichnet sich dadurch aus, dass auf der anorganischen Beschichtung zumindest eine mit dieser Schicht verbundene Abschaltschicht aus Partikeln, sogenannten Abschaltpartikeln, die bei einer vorgegebenen Temperatur schmelzen und die Poren der anorganischen Schicht verschließen, vorhanden ist. Prinzipiell ist es möglich, dass die Abschaltschicht auf beiden Seiten des Separators vorhanden ist. Es hat sich aber als vorteilhaft erwiesen, wenn die Abschaltschicht nur auf einer Seite des erfindungsgemäßen Separators vorhanden ist. Eine einzige Abschaltschicht ist ausreichend, eine sichere Abschaltung im Bedarfsfall zu gewährleisten.

Bevorzugt weisen die erfindungsgemäßen Separatoren Träger auf, die flexibel sind und bevorzugt eine Dicke von weniger als 50 µm aufweisen. Durch die Flexibilität des Trägers wird gewährleitstet, dass auch der erfindungsgemäße Separator flexibel sein kann. Solche flexiblen Separatoren sind vielseitiger einsetzbar, z. B. in sogenannten Wickelzellen. Die Dicke des Trägers hat einen großen Einfluss auf die Eigenschaften des Separators, da zum einen die Flexibilität aber auch der Flächenwiderstand des mit Elektrolyt getränkten Separators von der Dicke des Trägers abhängig ist.

Bevorzugt weist der erfindungsgemäße Separator deshalb Träger auf, die eine Dicke von kleiner 30 µm, besonders bevorzugt kleiner 20 µm aufweisen. Um eine ausreichend hohe Leistungsfähigkeit der Batterien, insbesondere bei Lithiumionenbatterien erreichen zu können hat es sich als vorteilhaft erwiesen, wenn der erfindungsgemäße Separator einen Träger aufweist, der vorzugsweise eine Porosität von größer 50 %, bevorzugt von 50 bis 97 %, besonders bevorzugt von 60 bis 90 % und ganz besonders bevorzugt von 70 bis 90 % aufweist. Die Porosität ist dabei definiert als das Volumen des Vlieses (100 %) minus dem Volumen der Fasern des Vlieses, also dem Anteil am Volumen des Vlieses, der nicht von Material ausgefüllt wird. Das Volumen des Vlieses kann dabei aus den Abmessungen des Vlieses berechnet werden. Das Volumen der Fasern ergibt sich aus dem gemessen Gewicht des betrachteten Vlieses und der Dichte der Polymerfasern. Ebenso vorteilhaft kann es sein, wenn der Träger eine Porenradienverteilung aufweist, bei der mindestens 50 % der Poren einen Porenradius von 75 bis 150 µm aufweisen.

Der poröse Träger weist vorzugsweise gewebte oder ungewebte Polymer-, Glas- oder Keramikfasern auf. Besonders bevorzugt weist der Träger ein Glas- oder Polymergewebe oder - vlies auf bzw. ist ein solches Gewebe oder Vlies. Als Polymerfasern weist der Träger vorzugsweise nicht elektrisch leitfähige Fasern von Polymeren auf, die vorzugsweise ausgewählt sind aus Polyacrylnitril (PAN), Polyester, wie z. B. Polyethylenterephthalat (PET) und/oder Polyolefin (PO), wie z. B. Polypropylen (PP) oder Polyethylen (PE) oder Mischungen solcher Polyolefine. Die Polymerfasern der Träger weisen vorzugsweise einen Durchmesser von 0,1 bis 10 µm, besonders bevorzugt von 1 bis 5 µm auf. Besonders bevorzugte flexible Vliese weisen ein Flächengewicht von kleiner 20 g/m², vorzugsweise von 5 bis 10 g/m² auf.

Besonders bevorzugt weist der erfindungsgemäße Separator ein Polymervlies als Träger auf, welches eine Dicke von kleiner 30 µm, vorzugsweise mit einer Dicke von 10 bis 20 µm aufweist. Besonders wichtig für die Verwendung in einem erfindungsgemäßen Separator ist eine möglichst homogene Porenradienverteilung im Vlies. Eine möglichst homogene Porenradienverteilung im Vlies führt in Verbindung mit optimal abgestimmten Oxid-Partikeln bestimmter Größe zu einer optimierten Porosität des erfindungsgemäßen Separators.

Der erfindungsgemäße Separator weist auf und in dem Träger eine poröse, elektrisch isolierende, anorganische, vorzugsweise keramische Beschichtung auf. Vorzugsweise weist die auf dem Träger befindliche poröse anorganische Beschichtung Oxid-Partikel der Elemente Al, Si und/oder Zr mit einer mittleren Partikelgröße von 0,1 bis 20 bevorzugt von 0,5 bis 10 und ganz besonders bevorzugt von 1 bis 5 µm auf. Besonders bevorzugt weist der Separator eine auf und in dem Träger befindliche poröse anorganische Beschichtung auf, die Aluminiumoxid- Partikel mit einer mittleren Partikelgröße von 0,1 bis 20 bevorzugt von 0,5 bis 10 und ganz besonders bevorzugt von 1 bis 5 aufweist, die mit einem Oxid der Metalle Zr oder Si verklebt sind. Durch das Vorhandensein der anorganischen Beschichtung auf und in dem porösen Träger werden die mechanischen Eigenschaften des erfindungsgemäßen Separators deutlich verbessert. So kann etwa ein Abplatzen der anorganischen Beschichtung vom Träger vermieden werden, was zu einem fatalen Versagen des Separators führen kann.

Die erfindungsgemäßen Separatoren lassen sich ohne Beschädigung vorzugsweise bis auf jeden Radius bis herab zu 100 m, vorzugsweise bis herab zu 50 mm und ganz besonders bevorzugt bis herab zu 0,5 mm biegen. Die erfindungsgemäßen Separatoren zeichnen sich außerdem dadurch aus, dass sie eine Reißfestigkeit von mindestens 1 N/cm, vorzugsweise von mindestens 3 N/cm und ganz besonders bevorzugt von größer 6 N/cm aufweisen können. Die hohe Reißfestigkeit und die gute Biegbarkeit des erfindungsgemäßen Separators hat den Vorteil, dass beim Laden und Entladen einer Batterie auftretende Veränderungen der Geometrien der Elektroden durch den Separator mitgemacht werden können, ohne dass dieser beschädigt wird. Die Biegbarkeit hat zudem den Vorteil, dass mit diesem Separator kommerziell standardisierte Wickelzellen produziert werden können. Bei diesen Zellen werden die Elektroden/Separator-Lagen in standardisierter Größe miteinander spiralförmig aufgewickelt und kontaktiert.
Die erfindungsgemäß auf der anorganischen Schicht vorhandenen Abschaltpartikel können beispielweise natürliche oder künstliche Wachse, (niedrigschmelzende) Polymere, wie z. B. Polyolefine oder Mischungen davon sein, wobei das Material der Abschaltpartikel so ausgewählt wird, das die Partikel bei der gewünschten Abschalttemperatur aufschmelzen und die Poren des Separators verschließen, so dass ein weiterer Ionenfluss verhindert wird. Besonders bevorzugt weist der erfindungsgemäße Separator Abschaltpartikel aus Polyethylen (- wachs) auf.

Die Größe der Abschaltpartikel ist prinzipiell beliebig, solange sichergestellt ist, dass die Poren der anorganischen Schicht bei der Herstellung des erfindungsgemäßen Separators nicht verstopft werden. Vorzugsweise weisen die Abschaltpartikel eine mittlere Partikelgröße (D_{w}) auf, die größer als die mittlere Porengröße (dₛ) der Poren der anorganischen Schicht ist. Bevorzugt weisen die Abschaltpartikel eine mittlere Partikelgröße (D_{w}) auf, die größer als der mittlere Porendurchmesser (dₛ) und kleiner 5 dₛ, besonders bevorzugt kleiner 2 dₛ beträgt. Dies ist insbesondere deshalb vorteilhaft, weil so ein Eindringen und Verschließen der Poren der anorganischen Schicht, das eine Reduktion des Ionenflusses und damit der Leitfähigkeit des Separators und auch der Leistungsfähigkeit der Batterie zur Folge hätte, verhindert wird. Die Dicke der Abschaltpartikelschicht ist nur in sofern kritisch, als das eine zu dicke Schicht den Widerstand in dem Batteriesystem unnötig erhöhen würde. Um eine sichere Abschaltung zu erzielen, sollte die Abschaltpartikelschicht eine Dicke (z_{w}) aufweisen, die von ungefähr gleich der mittleren Partikelgröße der Abschaltpartikel (D_{w}) bis zu 10 D_{w}, vorzugsweise von kleiner 2 D_{w} bis größer 1 D_{w} beträgt.

Vorzugsweise weist der erfindungsgemäße Separator eine Porosität von 30 bis 80 % auf. Die Porosität bezieht sich dabei auf die erreichbaren, also offenen Poren. Die Porosität kann dabei mittels der bekannten Methode der Quecksilber-Porosimetrie bestimmt werden oder kann aus dem Volumen und der Dichte der verwendeten Einsatzstoffe errechnet werden, wenn davon ausgegangen wird, dass nur offene Poren vorliegen.

Die erfindungsgemäßen Separatoren mit Abschaltfunktion weisen vorzugsweise eine Dicke von kleiner 50 µm, bevorzugt kleiner 40 µm, besonders bevorzugt eine Dicke von 5 bis 30 µm und ganz besonders bevorzugt eine Dicke von 15 bis 25 µm auf. Die Dicke des Separators hat einen großen Einfluss auf die Eigenschaften des Separators, da zum einen die Flexibilität aber auch der Flächenwiderstand des mit Elektrolyt getränkten Separators von der Dicke des Separators abhängig ist. Durch die geringe Dicke wird ein besonders geringer elektrischer Widerstand des Separators in der Anwendung mit einem Elektrolyten erzielt. Der Separator selbst weist natürlich einen sehr hohen elektrischen Widerstand auf, da er selbst isolierende Eigenschaften aufweisen muss. Zudem erlauben dünnere Separatoren eine erhöhte Packungsdichte in einem Batteriestapel, so dass man im gleichen Volumen eine größere Energiemenge speichern kann.

Die erfindungsgemäßen Separatoren mit Abschaltfunktion sind vorzugsweise erhältlich durch ein Verfahren zur Herstellung solcher Separatoren, welches dadurch gekennzeichnet ist, dass auf eine poröse anorganische Schicht eines Separators ohne Abschaltfunktion Partikel als Abschaltpartikel aufgebracht und fixiert werden, die eine definierte, gewünschte Schmelztemperatur aufweisen. Prinzipiell kann jeder Separator, der eine anorganische Schicht auf einem porösen Träger aufweist, als Ausgangsmaterial zur Herstellung von erfindungsgemäßen Separatoren eingesetzt werden.

Die Herstellung von speziellen Separatoren bzw. Membranen, die als Separatoren in dem erfindungsgemäßen Verfahren eingesetzt werden können, ist prinzipiell aus WO 99/15262 bekannt. Der dort beschriebene Einsatz von elektrisch leitfähigen Einsatzstoffen und flexiblen Trägern, wie z. B. Edelstahl, kann jedoch dazu führen, dass Separatoren erhalten werden, die für die Herstellung der erfindungsgemäßen Separatoren gar nicht oder nur sehr beschränkt einsetzbar sind. Der Einsatz von Separatoren, die gemäß dem nachfolgend beschriebenen Verfahren hergestellt wurden, hat sich bei dem Verfahren zur Herstellung des erfindungsgemäßen Separators als besonders vorteilhaft erwiesen.

Die als Separator in dem erfindungsgemäßen Verfahren bevorzugt einsetzbaren Separatoren werden durch Aufbringen einer Suspension, die anorganische elektrisch nicht leitende Partikel auf einen porösen, nicht elektrisch leitenden Träger und anschließendes Verfestigen der Suspension zu einer anorganischen Beschichtung auf und in dem porösen Träger erhalten.

Die Suspension kann z. B. durch Aufdrucken, Aufpressen, Einpressen Aufrollen, Aufrakeln, Aufstreichen, Tauchen, Spritzen oder Aufgießen auf den Träger gebracht werden.

Der eingesetzte Träger weist vorzugsweise eine Dicke von kleiner 30 µm, bevorzugt kleiner 20 µm und besonders bevorzugt eine Dicke von 10 bis 20 µm auf. Besonders bevorzugt werden als Träger solche eingesetzt, wie sie bei der Beschreibung des erfindungsgemäßen Separators beschrieben wurden. Der eingesetzte poröse Träger weist also vorzugsweise gewebte oder ungewebte Polymer-, Glas- oder Keramikfasern auf. Besonders bevorzugt weist der Träger ein Glas- oder Polymergewebe oder -vlies auf bzw. ist ein solches Gewebe oder Vlies.

Bevorzugt weist der eingesetzte Träger Polymerfasern auf, die eine Erweichungstemperatur von größer 100 °C und eine Schmelztemperatur von größer 110 °C aufweisen. Es kann vorteilhaft sein, wenn die Polymerfasern einen Durchmesser von 0,1 bis 10 µm, vorzugsweise von 1 bis 5 µm aufweisen.

Im Herstellverfahren für einen im erfindungsgemäßen Verfahren einsetzbaren Separator werden durch Hydrolyse der zu hydrolisierenden Verbindungen polymere Sole hergestellt. Diese polymeren Sole zeichnen sich dadurch aus, dass die in dem Sol durch Hydrolyse entstandenen Verbindungen polymer (also kettenförmig über einen größeren Raum vernetzt) vorliegen. Die polymeren Sole weisen üblicherweise weniger als 50 Gew.-%, vorzugsweise sehr viel weniger als 20 Gew.-% an Wasser und/oder wässriger Säure auf. Um auf den bevorzugten Anteil von Wasser und/oder wässriger Säure zu kommen wird die Hydrolyse vorzugsweise so durchgeführt, dass die zu hydrolisierende Verbindung mit dem 0,5 bis 10fachen Molverhältnis und bevorzugt mit dem halben Molverhältnis Wasser, Wasserdampf oder Eis, bezogen auf die hydrolisierbare Gruppe, der hydrolisierbaren Verbindung, hydrolisiert wird. Eine bis zu 10fache Menge an Wasser kann bei sehr langsam hydrolisierenden Verbindungen wie z. B. beim Tetraethoxysilan eingesetzt werden. Sehr schnell hydrolisierende Verbindungen wie das Zirkontetraethylat können unter diesen Bedingungen durchaus schon partikuläre Sole bilden, weshalb zur Hydrolyse solcher Verbindungen bevorzugt die 0,5fache Menge an Wasser eingesetzt wird. Eine Hydrolyse mit weniger als der bevorzugten Menge an Wasser, Wasserdampf, oder Eis führt ebenfalls zu guten Ergebnissen. Wobei ein Unterschreiten der bevorzugten Menge von einem halben Molverhältnis um mehr als 50 % möglich aber nicht sehr sinnvoll ist, da beim Unterschreiten dieses Wertes die Hydrolyse nicht mehr vollständig ist und Beschichtungen auf Basis solcher Sole nicht sehr stabil sind.

Zur Herstellung dieser Sole mit dem gewünschten sehr geringen Anteil an Wasser und/oder Säure im Sol kann es vorteilhaft sein, wenn die zu hydrolisierende Verbindung in einem organischen Lösemittel, insbesondere Ethanol, Isopropanol, Butanol, Amylalkohol, Hexan, Cyclohexan, Ethylacetat und oder Mischungen dieser Verbindungen, gelöst wird bevor die eigentliche Hydrolyse vorgenommen wird. Ein so hergestelltes Sol kann zur Herstellung der erfindungsgemäßen Suspension oder als Haftvermittler in einem Vorbehandlungsschritt eingesetzt werden.

Es wurde gefunden, dass ein Solsystem bzw. eine Suspension, welches bzw. welche im Benetzungsverhalten den Polymeren angepasst wurde, die Trägermaterialien, insbesondere die Vliesmaterialien vollständig durchtränkt und somit fehlerfreie Beschichtungen erhältlich sind. Bevorzugt erfolgt bei dem Verfahren deshalb eine Anpassung des Benetzungsverhaltens des Sols bzw. der Suspension. Diese Anpassung erfolgt durch die Herstellung von polymeren Solen bzw. Suspensionen aus polymeren Solen wobei diese Sole einen oder mehrere Alkohole, wie z. B. Methanol, Ethanol oder Propanol oder Mischungen, die einen oder mehrere Alkohole sowie, vorzugsweise aliphatische Kohlenwasserstoffe aufweisen, umfassen. Es sind aber auch andere Lösemittelgemische denkbar, die dem Sol bzw. der Suspension zugegeben werden können, um diese im Vernetzungsverhalten an das verwendete Vlies anzupassen.

Es wurde festgestellt, dass die grundlegende Änderung des Solsystems und der daraus resultierenden Suspension zu einer deutlichen Verbesserung der Haftungseigenschaften der keramischen Komponenten auf dem und in einem polymeren Vliesmaterial führt. Solche guten Haftfestigkeiten sind mit partikulären Solsystemen normalerweise nicht erhältlich. Vorzugsweise werden deshalb Vliese, die Polymerfasern aufweisen, mittels Suspensionen beschichtet, die auf polymeren Solen basieren oder in einem vorgeschalteten Schritt durch Behandlung mit einem polymeren Sol mit einem Haftvermittler ausgerüstet wurden.

Besonders bevorzugt werden zur Herstellung der Suspension als Metalloxid-Partikel Aluminiumoxidpartikel eingesetzt, die bevorzugt eine mittleren Partikelgröße von 0,1 bis 20 aufweisen. Vorzugsweise beträgt der Massenanteil der suspendierten Komponente (Partikel) das 1 bis 250-fache, besonders bevorzugt das 1 bis 50fache des eingesetzten Sols.

Aluminiumoxid-Partikel im Bereich der bevorzugten Partikelgrößen werden beispielweise von der Firma Martinswerke unter den Bezeichnungen *MZS 3 und MZS1* und von der Firma AlCoA unter der Bezeichnung CT3000 SG, CL3000 SG, CT1200 SG, CT800SG und HVA SG angeboten.

Es hat sich herausgestellt, dass der Einsatz von handelsüblichen Oxidpartikeln unter Umständen zu unbefriedigenden Ergebnissen führt, da häufig eine sehr breite Korngrößenverteilung vorliegt. Es werden deshalb bevorzugt Metalloxidpartikel eingesetzt, die durch ein herkömmliches Verfahren, wie z. B. Windsichten und Hydroklassieren klassiert wurden.

Zur Verbesserung der Haftung der anorganischen Komponenten an Polymerfasern bzw. - vliesen als Substrat, aber auch zur Verbesserung der Haftung der später aufzubringenden Abschaltpartikel, werden, den eingesetzten Suspensionen Haftvermittler, wie z. B. organofunktionelle Silane, wie z. B. die Degussa-Silane GLYMO, MEMO, AMEO, VTEO oder Silfin, beigefügt. Das Beifügen von Haftvermittlern ist dabei bei Suspensionen auf Basis polymerer Sole bevorzugt. Als Haftvermittler sind insbesondere Verbindungen, ausgewählt aus den Octylsilanen, den Vinylsilanen, den aminfunktionalisierten Silanen und/oder den Glycidyl-funktionalisierten Silanen, wie z. B. die Dynasilane der Fa. Degussa einsetzbar. Besonders bevorzugte Haftvermittler für Polyethylen (PE) und Polypropylen (PP) sind Vinyl-, Methyl- und Octylsilane, wobei eine ausschließliche Verwendung von Methylsilanen nicht optimal ist, für Polyamide und Polyamine sind es Aminfunktionelle Silane, für Polyacrylate und Polyester sind es Glycidyl-funktionalisierte Silane und für Polyacrylnitril kann man auch Glycidylfunktionalisierte Silane einsetzen. Auch andere Haftvermittler sind einsetzbar, die aber auf die jeweiligen Polymere abgestimmt sein müssen. Die Haftvermittler müssen dabei so ausgewählt werden, dass die Verfestigungstemperatur unterhalb des Schmelz- oder Erweichungspunktes des als Substrat eingesetzten Polymeren und unterhalb dessen Zersetzungstemperatur liegt. Als Haftvermittler sind insbesondere die in Tabelle 1 aufgeführten Silane einsetzbar. Bevorzugt weisen erfindungsgemäße Suspensionen sehr viel weniger als 25 Gew.-%, vorzugsweise weniger als 10 Gew.-% Verbindungen auf, die als Haftvermittler fungieren können. Ein optimaler Anteil an Haftvermittler ergibt sich aus der Beschichtung der Fasern und/oder Partikel mit einer monomolekularen Lage des Haftvermittlers. Die hierzu benötigte Menge an Haftvermittler in Gramm kann durch Multiplizieren der Menge der eingesetzten Oxide, beziehungsweise der Fasern (in g) mit der spezifischen Oberfläche der Materialien (in m²g⁻¹) und anschließendes Dividieren durch den spezifischen Platzbedarf der Haftvermittler (in m² g⁻¹) erhalten werden, wobei der spezifische Platzbedarf häufig in der Größenordnung von 300 bis 400 m² g⁻¹ liegt.

Die nachfolgende Tabelle 1 enthält einen beispielhaften Überblick über einsetzbare Haftvermittler auf Basis von organofunktionellen Si-Verbindungen für typische als Vliesmaterial verwendete Polymere.

**Tabelle 1**

| Polymer | Organofunktionstyp | Haftvermittler |
|---|---|---|
| PAN | Glycidyl | GLYMO |
| | Methacryl | MEMO |
| PA | Amino | AMEO, DAMO |
| PET | Methacryl | MEMO |
| | Vinyl | VTMO, VTEO, VTMOEO |
| PE, PP | Amino | AMEO, AMMO |
| | Vinyl | VTMO, VTEO, Silfin |
| | Methacryl | MEMO |

| | | |
|---|---|---|
| Mit: AMEO = 3-Aminopropyltriethoxysilan DAMO = 2-Aminoethyl-3-aminopropyltrimethoxysilan GLYMO = 3-Glycidyloxytrimethoxysilan MEMO = 3-methacryloxypropyltrimethoxysilan Silfin = Vinylsilan + Initiator + Katalysator VTEO = Vinyltriethoxysilan VTMO = Vinyltrimethoxysilan VTMOEO = Vinyltris(2-methoxyethoxy)silan | | |

In einer besonderen Ausführungsform des erfindungsgemäßen Verfahrens werden die oben genannten Haftvermittler in einem vorgeschalteten Schritt auf das Substrat, insbesondere das Polymervlies aufgebracht. Hierzu werden die Haftvermittler in einem geeigneten Lösemittel, wie z. B. Ethanol gelöst. Diese Lösung kann auch noch eine geringe Menge an Wasser, vorzugsweise die 0,5 bis 10fache Menge bezogen auf die molare Menge der hydrolysierbaren Gruppe, und kleine Mengen einer Säure, wie z. B. HCl oder HNO₃, als Katalysator für die Hydrolyse und Kondensation der Si-OR-Gruppen enthalten. Durch die bekannten Techniken, wie z. B. Aufsprühen, Aufdrucken, Aufpressen, Einpressen Aufrollen, Aufrakeln, Aufstreichen, Tauchen, Spritzen oder Aufgießen wird diese Lösung auf das Substrat aufgebracht und der Haftvermittler durch eine Temperaturbehandlung bei 50 bis maximal 350 °C auf dem Substrat fixiert. Erst nach dem Aufbringen des Haftvermittlers erfolgt bei dieser Ausführungsvariante des erfindungsgemäßen Verfahrens das Aufbringen und Verfestigen der Suspension.

Durch das Aufbringen eines Haftvermittlers vor dem eigentlichen Aufbringen der Suspension kann das Haftverhalten der Substrate insbesondere gegenüber wässrigen, partikulären Solen verbessert werden. Diese Vorgehensweise des Aufbringens eines Haftvermittlers bedeutet aber auch, dass das Herstellverfahren der erfindungsgemäßen Membran um einen Zwischen- bzw. Vorbehandlungsschritt erweitert werden muss. Dies ist machbar allerdings auch aufwendiger als die Verwendung von angepassten Solen denen Haftvermittler beigegeben wurden, hat aber auch den Vorteil, dass auch beim Einsatz von Suspensionen auf Basis von handelsüblichen Solen bessere Ergebnisse erzielt werden.

Die durch die Beschichtungen auf und im Träger vorhandene Suspension kann z. B. durch Erwärmen auf 50 bis 350 °C verfestigt werden. Da bei der Verwendung polymerer Substratmaterialien die maximal Temperatur durch das Trägermaterial vorgegeben wird, ist diese entsprechend anzupassen. So wird je nach Ausführungsvariante des Verfahrens die auf und im Träger vorhandene Suspension durch Erwärmen auf 100 bis 350 °C und ganz besonders bevorzugt durch Erwärmen auf 200 bis 280 °C verfestigt. Es kann vorteilhaft sein, wenn das Erwärmen für 1 Sekunde bis 60 Minuten bei einer Temperatur von 150 bis 350 °C erfolgt. Besonders bevorzugt erfolgt das Erwärmen der Suspension zum Verfestigen auf eine Temperatur von 110 bis 300 °C, ganz besonders bevorzugt bei einer Temperatur von 200 bis 280 °C und vorzugsweise für 0,5 bis 10 min.
Das Erwärmen des Verbundes kann mittels erwärmter Luft, Heißluft, Infrarotstrahlung oder durch andere Erwärmungsmethoden nach dem Stand der Technik erfolgen.

Das Verfahren zur Herstellung von im erfindungsgemäßen Verfahren einsetzbaren Separatoren kann z. B. so durchgeführt werden, dass der Träger von einer Rolle abgerollt wird, mit einer Geschwindigkeit von 1 m/h bis 2 m/s, vorzugsweise mit einer Geschwindigkeit von 0,5 m/min. bis 20 m/min und ganz besonders bevorzugt mit einer Geschwindigkeit von 1 m/min bis 5 m/min durch zumindest eine Apparatur, welche die Suspension auf und in den Träger bringt, wie z. B. eine Walze, und zumindest eine weitere Apparatur, welche das Verfestigen der Suspension auf und in dem Träger durch Erwärmen ermöglicht, wie z. B. ein elektrisch beheizter Ofen durchläuft und der so hergestellte Separator auf einer zweiten Rolle aufgerollt wird. Auf diese Weise ist es möglich, den Separator im Durchlaufverfahren herzustellen. Auch die Vorbehandlungsschritte können im Durchlaufverfahren unter Beibehaltung der genannten Parameter durchgeführt werden.

Die so hergestellten Separatoren oder aber auf andere Arten hergestellte Separatoren weisen, wenn sie nicht unter Verwendung eines Haftvermittlers hergestellt wurden, häufig anorganische Beschichtungen auf, die einen sehr hydrophilen Charakter haben. Um eine gute Haftung und gleichmäßige Verteilung der Abschaltpartikel in der Abschaltschicht auch auf hydrophilen porösen anorganischen Schichten zu erreichen, sind mehrere Varianten möglich.

In einer Ausführungsvariante des erfindungsgemäßen Verfahren hat es sich als vorteilhaft erwiesen, die poröse anorganische Schicht vor dem Aufbringen der Abschaltpartikel zu hydrophobieren. Die Herstellung hydrophober Membrane, die als Ausgangsmaterial für die Herstellung der erfindungsgemäßen Separatoren dienen können, wird beispielsweise in WO 99/62624 beschrieben. Vorzugsweise wird die poröse anorganische Schicht durch Behandlung mit Alkyl-, Aryl- oder Fluoralkylsilanen, wie sie z. B. unter dem Namen Markennamen Dynasilan von der Degussa vertrieben werden, hydrophobiert. Es können dabei z. B. die bekannten Methoden der Hydrophobierung, die unter anderem für Textilien angewendet werden (D. Knittel; E. Schollmeyer; Melliand Textilber. (1998) 79(5), 362-363*),* unter geringfügiger Änderung der Rezepturen, auch für poröse stoffdurchlässige Verbundwerkstoffe, welche z. B. nach dem in PCT/EP98/05939 beschriebenen Verfahren hergestellt wurden, angewendet werden. Zu diesem Zweck wird ein stoffdurchlässiger Verbundwerkstoff (Membran oder Separator) mit einer Lösung behandelt, die zumindest einen hydrophoben Stoff aufweist. Es kann vorteilhaft sein, wenn die Lösung als Lösemittel Wasser, welches vorzugsweise mit einer Säure, vorzugsweise Essigsäure oder Salzsäure, auf einen pH-Wert von 1 bis 3 eingestellt wurde, und/oder einen Alkohol, vorzugsweise Ethanol, aufweist. Der Anteil an mit Säure behandeltem Wasser bzw. an Alkohol am Lösemittel kann jeweils von 0 bis 100 Vol.-% betragen. Vorzugsweise beträgt der Anteil an Wasser am Lösemittel von 0 bis 60 Vol.-% und der Anteil an Alkohol von 40 bis 100 Vol.-%. In das Lösemittel werden zum Erstellen der Lösung 0,1 bis 30 Gew.-%, vorzugsweise 1 bis 10.Gew.-% eines hydrophoben Stoffes gegeben werden. Als hydrophobe Stoffe können z. B. die oben aufgeführten Silane verwendet werden. Überraschenderweise findet eine gute Hydrophobierung nicht nur mit stark hydrophoben Verbindungen, wie zum Beispiel mit dem Triethoxy(3,3,4,4,5,5,6,6,7,7,8,8-tridecafluoroctyl)silan statt, sondern eine Behandlung mit Methyltriethoxysilan oder i-Butyltriethoxysilan ist vollkommen ausreichend, um den gewünschten Effekt zu erzielen. Die Lösungen werden, zur gleichmäßigen Verteilung der hydrophoben Stoffe in der Lösung, bei Raumtemperatur gerührt und anschließend auf die poröse anorganische Schicht aufgebracht und getrocknet. Das Trocknen kann durch eine Behandlung bei Temperaturen von 25 bis 100 °C beschleunigt werden.

In einer weiteren Ausführungsvariante des erfindungsgemäßen Verfahren kann die poröse anorganische Schicht vor dem Aufbringen der Abschaltpartikel auch mit anderen Haftvermittlern behandelt werden. Die Behandlung mit einem der in Tabelle 1 genannten Haftvermittler kann dann ebenfalls wie oben beschrieben erfolgen, d. h. dass die poröse anorganische Schicht mit einem polymeren Sol, welches ein Silan als Haftvermittler aufweist, behandelt wird. Insbesondere kann die Behandlung in der Weise erfolgen, dass bei der Herstellung des Separators wie oben beschrieben Haftvermittler eingesetzt werden.

Die Schicht aus Abschaltpartikeln wird vorzugsweise durch Aufbringen einer Suspension von Abschaltpartikeln in einem Suspensionsmittel, ausgewählt aus einem Sol, Wasser oder Lösemittel, wie z. B. Alkohol, Kohlenwasserstoffe, Ether oder Ketone oder einem Lösemittelgemisch. Die Partikelgröße der in der Suspension vorliegenden Abschaltpartikel ist prinzipiell beliebig. Es ist jedoch vorteilhaft, wenn in der Suspension Abschaltpartikel mit einer mittleren Partikelgröße (D_{w}) größer der mittleren Porengröße der Poren der porösen anorganischen Schicht (dₛ) vorliegen, da so sichergestellt wird, dass die Poren der anorganischen Schicht bei der Herstellung des erfindungsgemäßen Separators nicht durch Abschaltpartikel verstopft werden. Bevorzugt weisen die eingesetzten Abschaltpartikel eine mittlere Partikelgröße (D_{w}) auf, die größer als der mittlere Porendurchmesser (dₛ) und kleiner 5 dₛ, besonders bevorzugt kleiner 2 dₛ beträgt.

Bevorzugt wird als Lösemittel für die Dispersion Wasser verwendet. Diese wässrige Dispersionen werden auf einen Polymer- bzw. Wachsgehalt von 1 bis 60, bevorzugt von 5 bis 50 und ganz besonders bevorzugt von 20 bis 40 Gew.% eingestellt. Bei der Verwendung von Wasser als Lösemittel lassen sich sehr einfach bevorzugte mittlere Partikelgrößen von 1 bis 10 µm in der Dispersion erhalten, wie sie für die erfindungsgemäßen Separatoren sehr gut geeignet sind.

Wird ein nicht-wässriges Lösemittel zur Herstellung der Wachs- oder Polymerdispersion verwendet, so lassen sich bevorzugt mittlere Partikelgrößen in der Dispersion von kleiner 1 µm erhalten. Auch Mischungen von nicht-wässrigen Lösemitteln mit Wasser können eingesetzt werden.

Sollte es gewünscht sein Abschaltpartikel einzusetzen, die eine Partikelgröße kleiner der Porengröße der Poren der porösen anorganischen Schicht aufweisen, so muss vermieden werden, dass die Partikel in die Poren der porösen anorganischen Schicht eindringen. Gründe für den Einsatz solcher Partikel können z. B. in großen Preisunterschieden aber auch in der Verfügbarkeit solcher Partikel liegen. Eine Möglichkeit das Eindringen der Abschaltpartikel in die Poren der porösen anorganischen Schicht zu verhindern besteht darin, die Viskosität der Suspension so einzustellen, dass in Abwesenheit von äußeren Scherkräften kein Eindringen der Suspension in die Poren der anorganischen Schicht erfolgt. Eine solch hohe Viskosität der Suspension kann z. B. dadurch erreicht werden, dass der Suspension Hilfsstoffe, die das Fließverhalten beeinflussen, wie z. B. Kieselsäuren (Aerosil, Degussa) hinzugefügt werden. Beim Einsatz von Hilfsstoffen wie z. B. Aerosil 200 ist häufig ein Anteil von 0,1 bis 10 Gew.-%, vorzugsweise 0,5 bis 50 Gew.-% Kieselsäure, bezogen auf die Suspension, schon ausreichend um eine genügend hohe Viskosität der Suspension zu erzielen. Der Anteil an Hilfsstoffen kann jeweils durch einfache Vorversuche ermittelt werden.

Es kann vorteilhaft sein, wenn die eingesetzte Abschaltpartikel aufweisende Suspension Haftvermittler aufweist. Eine solche Haftvermittler aufweisende Suspension kann direkt auf einen Separator aufgebracht werden, auch wenn dieser nicht vor dem Aufbringen hydrophobiert wurde. Natürlich kann eine Haftvermittler aufweisende Suspension auch auf einen hydrophobierten Separator oder auf einen Separator, bei dessen Herstellung ein Haftvermittler eingesetzt wurde, aufgebracht werden. Als Haftvermittler in der Abschaltpartikel aufweisenden Suspension werden vorzugsweise Silane eingesetzt, die Amino-, Vinyl- oder Methacrylseitengruppen aufweisen. Solche Silane sind z. B. von der Degussa als reine Produkte oder als wässrige Lösungen des hydrolisierten Silans unter z. B. der Bezeichnung Dynasilan 2926, 2907 oder 2781 erhältlich. Ein Anteil von maximal 10 Gew.-% an Haftvermittler hat sich als ausreichend für die Sicherstellung einer genügend großen Haftung der Abschaltpartikel an der porösen anorganischen Schicht herausgestellt. Vorzugsweise weisen Haftvermittler aufweisende Suspensionen von Abschaltpartikeln von 0,1 bis 10 Gew.-%, bevorzugt von 1 bis 7,5 Gew.-% und ganz besonders bevorzugt von 2,5 bis 5 Gew.-% an Haftvermittler bezogen auf die Suspension auf.

Als Abschaltpartikel können alle Partikel eingesetzt werden, die einen definierten Schmelzpunkt aufweisen. Das Material der Partikel wird dabei entsprechend der gewünschten Abschalttemperatur ausgewählt. Da bei den meisten Batterien relativ niedrige Abschalttemperaturen gewünscht werden, ist es vorteilhaft solche Abschaltpartikel einzusetzen, die ausgewählt sind aus Partikeln aus Polymeren, Polymermischungen, natürlichen und/oder künstlichen Wachsen. Besonders bevorzugt werden als Abschaltpartikel Partikel aus Polypropylen- oder Polyethylenwachs eingesetzt.

Das Aufbringen der die Abschaltpartikel aufweisenden Suspension kann durch Aufdrucken, Aufpressen, Einpressen, Aufrollen, Aufrakeln, Aufstreichen, Tauchen, Spritzen oder Aufgießen auf die poröse anorganische Schicht erfolgen. Die Abschaltschicht wird vorzugsweise dadurch erhalten, dass die aufgebrachte Suspension bei einer Temperatur von Raumtemperatur bis 100 °C, vorzugsweise von 40 bis 60 °C getrocknet wird. Die Trocknung muss so durchgeführt werden, dass die Abschaltpartikel nicht schmelzen.

Es kann vorteilhaft sein, wenn die Partikel nach dem Aufbringen auf die poröse anorganische Schicht durch zumindest einmaliges Erwärmen auf eine Temperatur oberhalb der Glastemperatur, so dass ein Anschmelzen der Partikel ohne Änderung der eigentlichen Form erreicht wird, fixiert werden. Auf diese Weise kann erreicht werden, dass die Abschaltpartikel besonders gut an der porösen, anorganischen Schicht haften.

Das Aufbringen der Suspension mit anschließendem Trocknen sowie ein eventuelles Erwärmen über die Glasübergangstemperatur kann kontinuierlich oder quasi kontinuierlich durchgeführt werden. Wird ein flexibler Separator als Ausgangsmaterial eingesetzt, so kann dieser wiederum von einer Rolle abgewickelt, durch eine Beschichtungs-, Trocknungs- und gegebenenfalls Erwärmungsapparatur geführt und anschließend wieder aufgerollt werden.

Die erfindungsgemäßen Separatoren bzw. die erfindungsgemäß hergestellten Separatoren können insbesondere als Separator in Batterien, insbesondere als Separator in Lithiumbatterien, vorzugsweise Lithium-Hochleistungs- und Hochenergiebatterien eingesetzt werden. Solche Lithium-Batterien können als Elektrolyten Lithiumsalze mit großen Anionen in Carbonaten als Lösemittel auf. Geeignete Lithiumsalze sind z. B. LiClO₄ LiBF₄, LiAsF₆ oder LiPF₆, wobei LiPF₆ besonders bevorzugt ist. Als Lösemittel geeignete organische Carbonate sind z. B. Ethylencarbonat, Propylencarbonat, Dimethylcarbonat, Ethylmethylcarbonat oder Diethylcarbonat oder Mischungen davon.

Gegenstand der Erfindung sind außerdem Batterien, insbesondere Lithium-Batterien die einen erfindungsgemäßen oder erfindungsgemäß hergestellten Separator aufweisen.

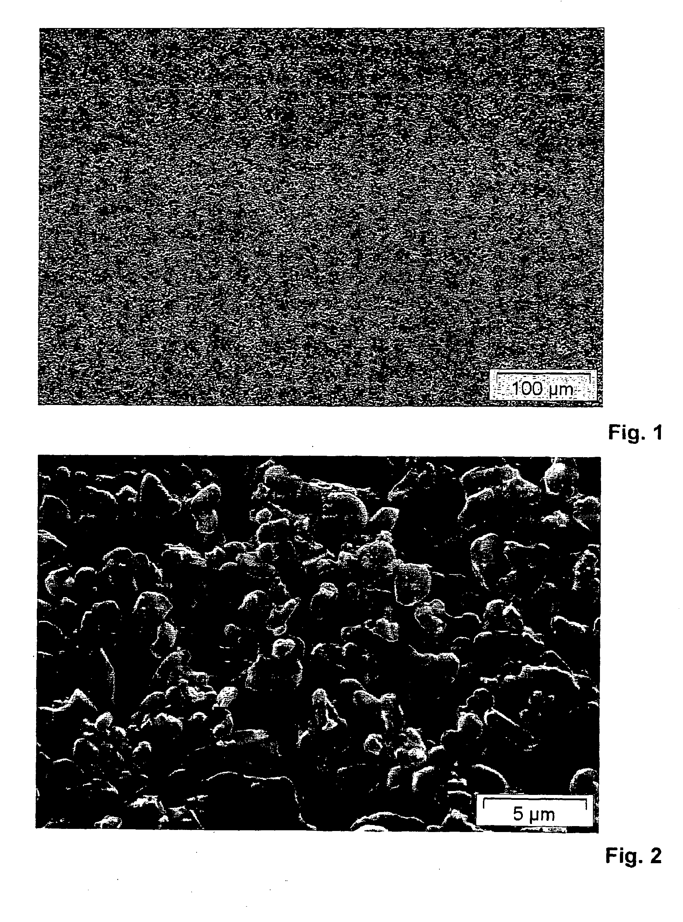

Die vorliegende Erfindung wird durch Figuren Fig. 1 bis Fig. 6 näher erläutert, ohne dass die Erfindung darauf beschränkt sein soll.

Die Figuren Fig. 1 und Fig. 2 zeigen in unterschiedlichen Vergrößerungen rasterelektronenmikroskopische Aufnahmen (REM-Aufnahmen) eines herkömmlichen Separators, der auf der anorganischen Schicht keine Abschaltpartikel aufweist (Vergleichsbeispiel 1).

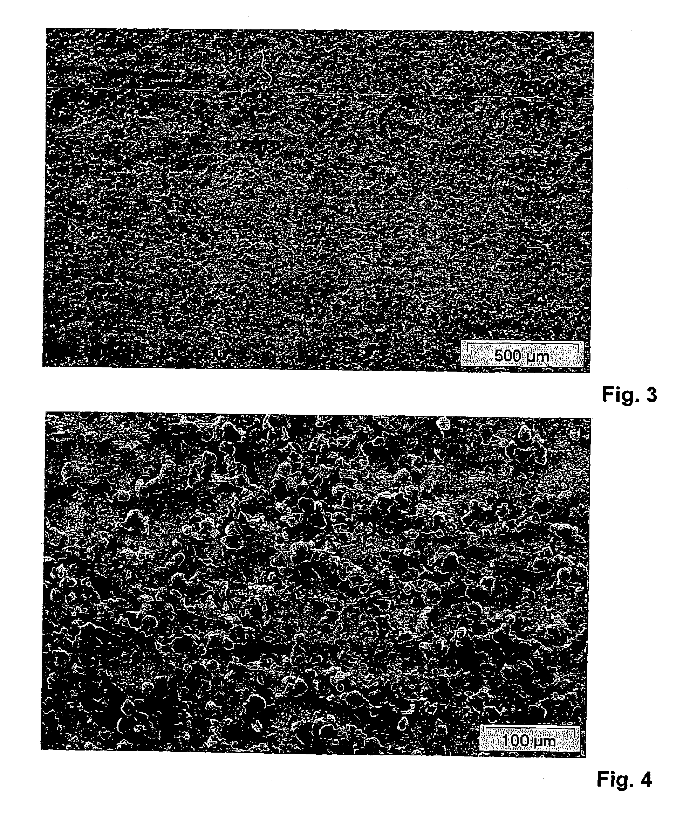

Die Figuren Fig. 3 und Fig. 4 zeigen in unterschiedlichen Vergrößerungen rasterelektronenmikroskopische Aufnahmen (REM-Aufnahmen) eines gemäß Beispiel 1 hergestellten Separators mit Abschaltfunktion. Sehr gut sind die Abschaltpartikel auf der Oberfläche zu erkennen.

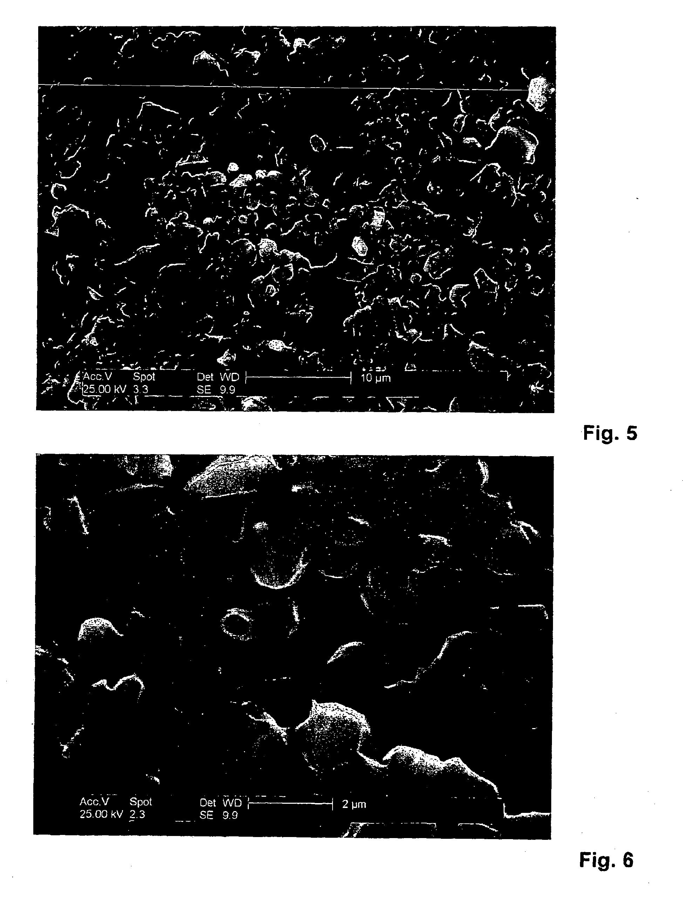

Die Figuren Fig. 5 und Fig. 6 zeigen in unterschiedlichen Vergrößerungen rasterelektronenmikroskopische Aufnahmen (REM-Aufnahmen) eines gemäß Beispiel 1 hergestellten Separators mit Abschaltfunktion, der bei 150 °C getempert wurde. Es ist sehr gut die durch die verlaufenen Abschaltpartikel gebildete Oberfläche zu erkennen.

Die vorliegende Erfindung wird durch die nachfolgenden Beispiele beschrieben, ohne darauf beschränkt zu sein.

### Vergleichsbeispiel 1: S450PET-Separator ohne Abschaltfunktion

Zu 160 g Ethanol werden zunächst 15 g einer 5 Gew.-%igen, wässrigen HCl-Lösung, 10 g Tetraethoxysilan, 2,5 g Methyltriethoxysilan und 7,5 g Dynasilan GLYMO (Hersteller aller Dynasilane: Degussa AG) gegeben. In diesem Sol, das zunächst für einige Stunden gerührt wurde, werden dann jeweils 125 g der Aluminiumoxide Martoxid MZS-1 und Martoxid MZS-3 (Hersteller beider Aluminiumoxide: Martinswerke) suspendiert. Dieser Schlicker wird für mindestens weitere 24 h mit einem Magnetrührer homogenisiert, wobei das Rührgefäß abgedeckt werden muss, damit es nicht zu einem Lösemittelverlust kommt.

Ein PET-Vlies mit einer Dicke von ca. 30 µm und einem Flächengewicht von etwa 20 g/m² wird damit in einem kontinuierlichen Aufwalzverfahren (Bandgeschwindigkeit ca. 8 m/h, T = 200 °C) mit obigem Schlicker beschichtet. Bei diesem Aufwalzverfahren wird der Schlicker mit einer Walze, die sich gegenläufig zur Bandrichtung (Bewegungsrichtung des Vlieses) bewegt auf das Vlies aufgewalzt. Das Vlies läuft anschließend durch einen Ofen, der die angegebene Temperatur aufweist. In den nachfolgenden Versuchen wird die gleiche Methode bzw. Anordnung zur Beschichtung verwendet. Man erhält am Ende einen Separator mit einer mittleren Porenweite von 450 nm und einer Dicke von ca. 50 µm. Die Gurley-Zahl beträgt etwa 6. Fig. 1 zeigt einen solchen Separator ohne Abschaltfunktion.

Dieser Separator wird mit Elektrolyt (LiPF₆ in einem 1:1-Gemisch aus EC/DMC) getränkt. Der mittels Impedanzspektroskopie bestimmte Flächenwiderstand liegt bei 5 Ωcm². Wird der Separator vor dem Tränken mit Elektrolyt auf 150 °C aufgeheizt so wird ebenfalls ein Flächenwiderstand von ca. 5 Ωcm² erhalten.

### Vergleichsbeispiel 2: Li-Ionen-Batterie mit hybridem keramischen Separator ohne Abschaltfunktion

Ein gemäß Vergleichsbeispiel 1 hergestellter S450PET-Separator wird in eine Li-Ionen-Zelle, bestehend aus einer Positiv-Masse ais LiCoO₂, einer Negativ-Masse bestehend aus Graphit und einem Elektrolyten aus LiPF₆ in Ethylencarbonat/ Dimethylcarbonat, eingebaut [LiCoO2 // S-450-PET, EC/DMC 1:1, 1M LiPF₆ // Graphit]. Es wurde das Lade- und Entladeverhalten dieser Batterie überprüft. Die Batterie zeigt nach etwa 250 Zyklen (Laden/Entladen mit C/5) nur einen geringen Abfall der Kapazität um wenige Prozentpunkte. Auch eine Erhöhung der Ladespannung von 4,1 auf 4,2 Volt im 200.-ten Ladezyklus schadet der Batterie nicht.

Diese Batterie wird über die äußeren Kontakte kurzgeschlossen. Aufgrund des großen Stromes der jetzt fließt und des Innenwiderstands des Separators kommt es zu einer sehr starken Erwärmung der Zelle auf über 200 °C. Aufgrund der keramischen Natur des Separators kommt es aber zu keinem melt-down, durch welchen sich die Temperatur weiter erhöhen würde und die Zelle unter Umständen explodieren könnte. Am Ende ist die Zelle vollständig entladen.

### Beispiel 1: S450PET-Separator mit Abschaltfunktion (nicht erfindungsgemäß)

Eine wässrige Dispersion von PE-Wachs (Vestowax A616, Firma Degussa) mit einer mittleren Partikelgröße von 5 µm wird hergestellt. Die Dispersion wird auf einen Massengehalt von 20 Gew.-% eingestellt. Zu dieser Dispersion gibt man 1 % des Dynasilans 2907 und rührt die Dispersion für eine Stunde.
Der 50 µm dicke Separator aus Vergleichsbeispiel 1 wird mit dieser Dispersion nach dem ebenfalls in Beispiel 1 genannten Beschichtungsverfahren kontinuierlich beschichtet. Die Trocknung erfolgt jetzt aber nur bei 60 °C. Fig. 3 zeigt ein Bild eines solchen mit PE-Wachs beschichteten Separators. Die PE-Wachs-Partikel sind in Fig. 4 sehr deutlich zu erkennen.

Dieser Separator wird mit Elektrolyt (LiPF₆ in einem 1:1-Gemisch aus EC/DMC) getränkt. Der mittels Impedanzspektroskopie bestimmte Flächenwiderstand liegt bei 5 Ωcm². Wird der Separator vor dem Tränken mit Elektrolyt auf 150 °C aufgeheizt so wird jetzt ein Flächenwiderstand von größer 500 Ωcm² erhalten. Fig. 5 zeigt ein Bild eines bei 150 °C getemperten Separator mit Abschaltfunktion. Es ist deutlich zu erkennen, dass die Wachspartikel geschmolzen sind und die Schmelze die Poren der Keramikschicht verschlossen haben.

### Beispiel 2: Herstellung eines S750PET-Separators

Zu 130 g Wasser und 30 g Ethanol werden zunächst 30 g einer 5 Gew.-%igen, wässrigen HNO₃-Lösung, 10 g Tetraethoxysilan, 2,5 g Methyltriethoxysilan und 7,5 g Dynasilan GLYMO (Hersteller aller Dynasilane: Degussa AG) gegeben. In diesem Sol, das zunächst für einige Stunden gerührt wurde, werden dann 260 g CL3000 SG (Hersteller: AlCoA) suspendiert. Dieser Schlicker wird für mindestens weitere 24 h mit einem Magnetrührer homogenisiert, wobei das Rührgefäß abgedeckt werden muss, damit es nicht zu einem Lösemittelverlust kommt. Vor dem Beschichten wird dieser Schlicker über ein 20 µm-Sieb filtriert um den Grobkornanteil zu entfernen.

Ein PET-Vlies mit einer Dicke von ca. 15 µm und einem Flächengewicht von etwa 6 g/m² wird damit in einem kontinuierlichen Aufwalzverfahren (Bandgeschwindigkeit ca. 8 m/h, T = 200 °C) mit obigem Schlicker beschichtet. Man erhält am Ende einen Separator mit einer mittleren Porenweite von 755 nm und einer Dicke von 30 µm. Die Gurley-Zahl beträgt etwa 3.

Eine wässrige Dispersion von PE-Wachs (Vestowax A616, Firma Degussa) mit einer mittleren Partikelgröße von 5 µm wird hergestellt. Die Dispersion wird auf einen Massengehalt von 20 Gew.-% eingestellt. Zu dieser Dispersion gibt man 1 % des Dynasilans 2926 und rührt die Dispersion für eine Stunde.

Der 30 µm dicke Separator ohne Abschaltfunktion wird mit dieser Dispersion nach dem oben beschriebenen Beschichtungsverfahren kontinuierlich beschichtet. Die Trocknung erfolgt jetzt aber nur bei 60 °C.

Dieser Separator mit Abschaltfunktion wird mit Elektrolyt (LiPF₆ in einem 1 : 1-Gemisch aus EC/DMC) getränkt. Der mittels Impedanzspektroskopie bestimmte Flächenwiderstand liegt bei 2 Ωcm². Wird der Separator vor dem Tränken mit Elektrolyt auf 150 °C aufgeheizt, so wird jetzt ein Flächenwiderstand von größer 500 Ωcm² erhalten.

### Beispiel 3: Herstellung eines S850PET-Separators

Zu 145 g Wasser und 15 g Ethanol werden zunächst 30 g einer 5 Gew.-%igen, wässrigen HNO₃-Lösung, 10 g Tetraethoxysilan, 2,5 g Methyltriethoxysilan und 7,5 g Dynasilan GLYMO (Hersteller aller Dynasilane: Degussa AG) gegeben. In diesem Sol, das zunächst für einige Stunden gerührt wurde, werden dann 280 g HVA SG (Hersteller: AlCoA) suspendiert. Dieser Schlicker wird für mindestens weitere 24 h mit einem Magnetrührer homogenisiert, wobei das Rührgefäß abgedeckt werden muss, damit es nicht zu einem Lösemittelverlust kommt. Vor dem Beschichten wird dieser Schlicker über ein 15 µm-Sieb filtriert um den Grobkornanteil zu entfernen.

Ein PET-Vlies mit einer Dicke von ca. 15 µm und einem Flächengewicht von etwa 6 g/m² wird damit in einem kontinuierlichen Aufwalzverfahren (Bandgeschwindigkeit ca. 8 m/h, T = 200 °C) mit obigem Schlicker beschichtet. Man erhält am Ende einen Separator mit einer mittleren Porenweite von 865 nm und einer Dicke von 30 µm. Die Gurley-Zahl beträgt etwa 2.

Eine wässrige Dispersion von PE-Wachs (Vestowax A616, Firma Degussa) mit einer mittleren Partikelgröße von 5 µm wird hergestellt. Die Dispersion wird auf einen Massengehalt von 20 Gew.-% eingestellt. Zu dieser Dispersion gibt man unter kräftigem Rühren 1 % des Dynasilans AMEO in Form einer 50%igen Lösung in Ethanol und rührt die Dispersion für eine Stunde.

Der 30 µm dicke Separator ohne Abschaltfunktion wird mit dieser Dispersion nach dem oben beschriebenen Beschichtungsverfahren kontinuierlich beschichtet. Die Trocknung erfolgt jetzt aber nur bei 60 °C.

Dieser Separator mit Abschaltfunktion wird mit Elektrolyt (LiPF₆ in einem 1:1-Gemisch aus EC/DMC) getränkt. Der mittels Impedanzspektroskopie bestimmte Flächenwiderstand liegt bei 1,5 Ωcm². Wird der Separator vor dem Tränken mit Elektrolyt auf 150 °C aufgeheizt so wird jetzt ein Flächenwiderstand von größer 500 Ωcm² erhalten.

### Beispiel 4: Li-Ionen-Batterie mit hybridem keramischen Separator (nicht erfindungsgemäß)

Ein gemäß Beispiel 1 hergestellter S450PET-Separator wird in eine Li-Ionen-Zelle, bestehend aus einer Positiv-Masse ais LiCoO₂, einer Negativ-Masse bestehend aus Graphit und einem Elektrolyten aus LiPF₆ in Ethylencarbonat/ Dimethylcarbonat, eingebaut [LiCoO2 // S-450-PET, EC/DMC 1:1, 1M LiPF₆ // Graphit]. Es wurde das Lade- und Entladeverhalten dieser Batterie überprüft. Die Batterie zeigt nach etwa 250 Zyklen (Laden/Entladen mit C/5) nur einen geringen Abfall der Kapazität um wenige Prozentpunkte. Auch eine Erhöhung der Ladespannung von 4,1 auf 4,2 Volt im 200.-ten Ladezyklus schadet der Batterie nicht.

Wir diese Batterie aber mit C (ca. 3 mA/cm²) entladen, so lässt sich bei diesen hohen Strömen nicht die gesamte Kapazität entladen. Dies ist auf den noch zu hohen Innenwiderstand zurückzuführen.

Diese Batterie wird über die äußeren Kontakte kurzgeschlossen. Aufgrund des großen Stromes der jetzt fließt und des Innenwiderstands des Separators kommt es zu einer starken Erwärmung der Zelle auf über 120 °C. Bei 120 °C schmilzt dann aber das PE-Wachs, worauf der Ionenstrom praktisch vollständig zusammenbricht und die Zelle sich langsam wieder auf Umgebungstemperatur abkühlt. Die Batterie ist jetzt in einem sicheren Zustand.

### Beispiel 5: Li-Ionen-Batterie mit hybridem keramischen Separator

Ein gemäß Beispiel 3 hergestellter S850PET-Separator wird in eine Li-Ionen-Zelle, bestehend aus einer Positiv-Masse ais LiCoO₂, einer Negativ-Masse bestehend aus Graphit und einem Elektrolyten aus LiPF₆ in Ethylencarbonatl Dimethylcarbonat, eingebaut [LiCoO2 // S-450-PET, EC/DMC 1:1, 1M LiPF₆ // Graphit]. Es wurde das Lade- und Entladeverhalten dieser Batterie überprüft. Die Batterie zeigt nach etwa 250 Zyklen (Laden/Entladen mit C/5) nur einen geringen Abfall der Kapazität um wenige Prozentpunkte. Auch eine Erhöhung der Ladespannung von 4,1 auf 4,2 Volt im 200.-ten Ladezyklus schadet der Batterie nicht.

Wir diese Batterie mit C (ca. 3 mA/cm²) entladen, so lässt sich bei diesen hohen Strömen praktisch die gesamte Kapazität der Batterie entladen. Dies ist auf die im Vergleich zu Beispiel 4 höhere Porosität, geringere Dicke größere Porengröße und damit verbunden geringerem Innenwiderstand zurückzuführen. Dieser Separator ist also für eine Hochstrombatterie besonders gut geeignet.

Durch diese Batterie hindurch wird ein Eisennagel geschlagen und die Elektroden werden damit auch kurzgeschlossen. Auch jetzt kommt es zu einer starken Erwärmung, wobei bei 120 °C die Wachspartikel schmelzen und die Poren verschließen, so dass der Ionenstrom praktisch unterbunden wird. An der Kontaktfläche Nagel-Separator hat sich aber die Temperatur auf über 150°C erwärmt. Aufgrund der keramischen Natur des Separators bleibt dieser Bereich intakt und es kommt zu keinem melt-down. Die Zelle ist in einem sicheren Zustand und kühlt sich wieder auf Raumtemperatur ab.

## Patentansprüche

1. Separator mit Abschaltfunktion für Lithium-Batterien umfassend einen porösen Träger mit einer auf und in diesem Träger befindlichen porösen anorganischen, nicht elektrisch leitfähigen Beschichtung, wobei
auf der anorganischen Beschichtung eine mit dieser Schicht verbundene Abschaltschicht aus Partikeln, sogenannten Abschaltpartikeln, die bei einer vorgegebenen Temperatur schmelzen und die Poren der anorganischen Schicht schließen, vorhanden ist,
**dadurch gekennzeichnet,**
**dass** die poröse anorganische Schicht durch Verwendung eines polymeren Sols, welches ein Silan als Haftvermittler für die später aufzubringenden Abschaltpartikel aufweist, hergestellt wird.

2. Separator gemäß Anspruch 1,
**dadurch gekennzeichnet,**
**dass** der Träger flexibel ist und eine Dicke von weniger als 50 µm aufweist.

3. Separator gemäß Anspruch 1 oder 2,
**dadurch gekennzeichnet,**
**dass** der Träger gewebte oder ungewebte Polymer- oder Glasfasern aufweist.

4. Separator nach Anspruch 3,
**dadurch gekennzeichnet,**
**dass** der Träger ein Polymervlies ist.

5. Separator nach Anspruch 3 oder 4,
**dadurch gekennzeichnet,**
**dass** die Polymerfasern, ausgewählt sind aus Fasern von Polyacrylnitril, Polyester und oder Polyolefin.

6. Separator nach zumindest einem der Ansprüche 1 bis 5,
**dadurch gekennzeichnet,**
**dass** der Träger eine Dicke kleiner 30 µm aufweist.

7. Separator gemäß einem der Ansprüche 1 bis 6,
**dadurch gekennzeichnet,**
**dass** die auf dem Träger befindliche poröse anorganische Beschichtung Oxid-Partikel der Elemente Al, Si und/oder Zr mit einer mittleren Partikelgröße von 0,5 bis 10 µm aufweist.

8. Separator gemäß zumindest einem der Ansprüche 1 bis 7,
**dadurch gekennzeichnet,**
**dass** die Abschaltpartikel eine mittlere Partikelgröße (D_{w}) aufweisen, die größer als die mittlere Porengröße (d) der Poren der porösen anorganischen Schicht ist.

9. Separator gemäß zumindest einem der Ansprüche 1 bis 8,
**dadurch gekennzeichnet,**
**dass** die Abschaltpartikelschicht eine Dicke (z_{w}) aufweist, die von ungefähr gleich der mittleren Partikelgröße der Abschaltpartikel (D_{w}) bis zu 10 mal der Partikelgröße D_{w} beträgt.

10. Separator gemäß zumindest einem der Ansprüche 1 bis 9,
**dadurch gekennzeichnet,**
**dass** die Abschaltpartikel ausgewählt sind aus Polymeren, Polymermischungen, natürlichen oder künstlichen Wachsen.

11. Verfahren zur Herstellung eines Separators mit Abschaltfunktion gemäß einem der Ansprüche 1 bis 10,
**dadurch gekennzeichnet,**
**dass** auf eine poröse anorganische Schicht eines Separators Partikel aufgebracht und fixiert werden, die eine definierte, gewünschte Schmelztemperatur aufweisen.

12. Verfahren nach Anspruch 11,
**dadurch gekennzeichnet,**
**dass** ein Separator gemäß zumindest einem der Ansprüche 1 bis 10 hergestellt wird.

13. Verfahren nach Anspruch 11 oder 12,
**dadurch gekennzeichnet,**
**dass** die poröse anorganische Schicht vor dem Aufbringen der Abschaltpartikel hydrophobiert wird.

14. Verfahren gemäß einem der Ansprüche 11 bis 13,
**dadurch gekennzeichnet,**
**dass** die poröse anorganische Schicht vor dem Aufbringen der Abschaltpartikel mit einem Haftvermittler behandelt wird.

15. Verfahren gemäß einem der Ansprüche 11 bis 14,
**dadurch gekennzeichnet,**
**dass** die Schicht aus Abschaltpartikeln durch Aufbringen einer Suspension von Abschaltpartikeln mit einer mittleren Partikelgröße größer der mittleren Porengröße der Separatorschicht in einem Suspensionsmittel, ausgewählt aus einem Sol, Wasser oder Alkoholen erzeugt wird.

16. Verfahren nach Anspruch 15,
**dadurch gekennzeichnet,**
**dass** die Suspension einen Haftvermittler aufweist.

17. Verfahren nach Anspruch 16,
**dadurch gekennzeichnet,**
**dass** der Haftvermittler ausgewählt wird aus der Reihe der hydrolisierten oder nicht hydrolisierten funktionalisierten Alkytrialkoxysilane.

18. Verfahren nach einem der Ansprüche 15 bis 17,
**dadurch gekennzeichnet,**
**dass** die Suspension durch Aufdrucken, Aufpressen, Einpressen, Aufrollen, Aufrakeln, Aufstreichen, Tauchen, Spritzen, Sprühen oder Aufgießen auf die poröse anorganische Schicht gebracht wird.

19. Verfahren nach zumindest einem der Ansprüche 15 bis 18,
**dadurch gekennzeichnet,**
**dass** die Schicht dadurch erhalten wird, dass die aufgebrachte Suspension bei einer Temperatur von Raumtemperatur bis 100 °C getrocknet wird.

20. Verfahren nach zumindest einem der Ansprüche 11 bis 19,
**dadurch gekennzeichnet,**
**dass** die Partikel nach dem Aufbringen auf die poröse anorganische Schicht durch einmaliges Erwärmen auf eine Temperatur oberhalb der Glastemperatur, so dass ein Anschmelzen der Partikel ohne Änderung der eigentlichen Form erreicht wird, fixiert werden.

21. Verfahren nach zumindest einem der Ansprüche 11 bis 20,
**dadurch gekennzeichnet,**
**dass** als Abschaltpartikel solche eingesetzt werden, die ausgewählt sind aus Partikeln aus Polymeren, Polymermischungen, natürlichen und/oder künstlichen Wachsen.

22. Verfahren nach Anspruch 21,
**dadurch gekennzeichnet,**
**dass** als Abschaltpartikel Partikel aus Polyethylenwachs eingesetzt werden.

23. Verwendung eines Separators gemäß zumindest einem der Ansprüche 1 bis 10 als Separator in Lithiumbatterien.

24. Batterie, einen Separator gemäß zumindest einem der Ansprüche 1 bis 10 aufweisend.

## Claims

1. Lithium battery separator having a shutdown function and comprising a porous carrier having a porous inorganic nonelectroconductive coating layer on and in said carrier, wherein a shutdown layer of shutdown particles which melt at a predetermined temperature and close the pores of said inorganic layer is present on said inorganic layer and bonded thereto, **characterized in that** said porous inorganic layer is produced by using a polymeric sol comprising a silane adhesion promoter for said shutdown particles to be applied later.

2. Separator according to Claim 1, **characterized in that** said carrier is flexible and less than 50 µm in thickness.

3. Separator according to Claim 1 or 2, **characterized in that** said carrier comprises woven or non-woven polymeric or glass fibres.

4. Separator according to Claim 3, **characterized in that** said carrier is a polymeric nonwoven.

5. Separator according to Claim 3 or 4, **characterized in that** said polymeric fibres are selected from fibres of polyacrylonitrile, polyester and/or polyolefin.

6. Separator according to at least one of Claims 1 to 5, **characterized in that** said carrier is less than 30 µm in thickness.

7. Separator according to any one of Claims 1 to 6, **characterized in that** said porous inorganic coating layer present on said carrier comprises oxide particles of the elements Al, Si and/or Zr from 0.5 to 10 µm in size on average.

8. Separator according to at least one of Claims 1 to 7, **characterized in that** said shutdown particles have an average size (D_{w}) which is greater than the average pore size (d) of said pores of said porous inorganic layer.

9. Separator according to at least one of Claims 1 to 8, **characterized in that** the layer of shutdown particles has a thickness (z_{w}) which is approximately in the range from said average size of said shutdown particles (D_{w}) up to 10 times said particle size D_{w}.

10. Separator according to at least one of Claims 1 to 9, **characterized in that** said shutdown particles are selected from polymers, polymer blends, natural waxes or artificial waxes.

11. Process for producing a separator having a shutdown function according to any one of Claims 1 to 10, **characterized in that** it comprises particles having a defined, desired melting temperature being applied to and fixed on a porous inorganic layer of a separator.

12. Process according to Claim 11, **characterized in that** a separator according to at least one of Claims 1 to 10.

13. Process according to Claim 11 or 12, **characterized in that** said porous inorganic layer is hydrophobicized before said shutdown particles are applied to it.

14. Process according to any one of Claims 11 to 13, **characterized in that** said porous inorganic layer is treated with an adhesion promoter before said shutdown particles are applied to it.

15. Process according to one of Claims 11 to 14, **characterized in that** said layer of shutdown particles is generated by applying a suspension of shutdown particles having an average size larger than the average pore size of the separator layer in a suspension medium selected from a sol, water or alcohols.

16. Process according to Claim 15, **characterized in that** said suspension comprises an adhesion promoter.

17. Process according to Claim 16, **characterized in that** it comprises selecting said adhesion promoter from hydrolyzed or nonhydrolyzed functionalized alkyltrialkoxysilanes.

18. Process according to any one of Claims 15 to 17, **characterized in that** said suspension is applied to said porous inorganic layer by printing on, pressing, pressing in, rolling on, knifecoating on, brushing on, dipping, squirting, spraying or pouring on.

19. Process according to at least one of Claims 15 to 18, **characterized in that** said layer is obtained by said applied suspension being dried at a temperature in the range from room temperature to 100°C.

20. Process according to at least one of Claims 11 to 19, **characterized in that** following application to said porous inorganic layer the particles are fixed by single heating to a temperature above the glass transition temperature to fuse on said particles without changing the actual shape.

21. Process according to at least one of Claims 11 to 20, **characterized in that** said shutdown particles are selected from particles composed of polymers, polymer blends, natural waxes and/or artificial waxes.

22. Process according to Claim 21, **characterized in that** said shutdown particles are particles composed of polyethylene wax.

23. Use of a separator according to at least one of Claims 1 to 10 as a separator in lithium batteries.

24. Battery comprising a separator according to at least one of Claims 1 to 10.

## Revendications

1. Séparateur à fonction de mise hors service pour batteries au lithium comprenant un support poreux présentant un revêtement poreux, inorganique, électriquement non conducteur se trouvant sur et dans ce support, une couche de mise hors service en particules, appelées particules de mise hors service qui fondent à une température définie et ferment les pores de la couche inorganique, se trouvant sur le revêtement inorganique et étant liée à celui-ci, **caractérisé en ce que** la couche inorganique poreuse est réalisée en utilisant un sol polymère, qui présente un silane comme promoteur d'adhérence pour les particules de mise hors service à appliquer ultérieurement.

2. Séparateur selon la revendication 1, **caractérisé en ce que** le support est souple et présente une épaisseur de moins de 50 µm.

3. Séparateur selon la revendication 1 ou 2, **caractérisé en ce que** le support présente des fibres polymères ou de verre tissées ou non tissées.

4. Séparateur selon la revendication 3, **caractérisé en ce que** le support est un non-tissé de polymère.

5. Séparateur selon la revendication 3 ou 4, **caractérisé en ce que** les fibres polymères sont choisies parmi les fibres de polyacrylonitrile, de polyester et/ou de polyoléfine.

6. Séparateur selon au moins l'une quelconque des revendications 1 à 5, **caractérisé en ce que** le support présente une épaisseur inférieure à 30 µm.

7. Séparateur selon l'une quelconque des revendications 1 à 6, **caractérisé en ce que** le revêtement inorganique poreux se trouvant sur le support présente des particules d'oxydes des éléments Al, Si et/ou Zr présentant une grosseur moyenne des particules de 0,5 à 10 µm.

8. Séparateur selon au moins l'une quelconque des revendications 1 à 7, **caractérisé en ce que** les particules de mise hors service présentent une grosseur moyenne de particule (D_{w}) qui est supérieure à la grandeur moyenne de pore (d) des pores de la couche inorganique.

9. Séparateur selon au moins l'une quelconque des revendications 1 à 8, **caractérisé en ce que** la couche de particules de mise hors service présente une épaisseur (z_{w}) qui est environ identique à la grosseur moyenne de particule des particules de mise hors service (D_{w}) jusqu'à 10 fois la grosseur moyenne de particule D_{w}.

10. Séparateur selon au moins l'une quelconque des revendications 1 à 9, **caractérisé en ce que** les particules de mise hors service sont choisies parmi les polymères, les mélanges de polymères, les cires naturelles ou synthétiques.

11. Procédé pour la fabrication d'un séparateur présentant une fonction de mise hors service selon l'une quelconque des revendications 1 à 10, **caractérisé en ce que** des particules, qui présentent une température de fusion définie, souhaitée, sont appliquées et fixées sur une couche inorganique poreuse d'un séparateur.

12. Procédé selon la revendication 11, **caractérisé en ce qu'**on fabrique un séparateur selon au moins l'une quelconque des revendications 1 à 10.

13. Procédé selon la revendication 11 ou 12, **caractérisé en ce que** la couche inorganique poreuse est hydrofugée avant l'application des particules de mise hors service.

14. Procédé selon l'une quelconque des revendications 11 à 13, **caractérisé en ce que** la couche inorganique poreuse est traitée avec un promoteur d'adhérence avant l'application des particules de mise hors service.

15. Procédé selon l'une quelconque des revendications 11 à 14, **caractérisé en ce que** la couche de particules de mise hors service est obtenue par application d'une suspension de particules de mise hors service présentant une grosseur moyenne de particule supérieure à la grandeur moyenne de pore de la couche de séparateur dans un agent de mise en suspension, choisi parmi un sol, de l'eau ou des alcools.

16. Procédé selon la revendication 15, **caractérisé en ce que** la suspension présente un promoteur d'adhérence.

17. Procédé selon la revendication 16, **caractérisé en ce que** le promoteur d'adhérence est choisi dans la série des alkyltrialcoxysilanes fonctionnalisés, hydrolysés ou non hydrolysés.

18. Procédé selon l'une quelconque des revendications 15 à 17, **caractérisé en ce que** la suspension est appliquée sur la couche inorganique poreuse par impression, par compression, par pressage, au cylindre, par raclage, par enduction, par trempage, par pulvérisation, par arrosage ou par coulage.

19. Procédé selon au moins l'une quelconque des revendications 15 à 18, **caractérisé en ce que** la couche est obtenue **en ce que** la suspension appliquée est séchée à une température allant de la température ambiante jusqu'à 100°C.

20. Procédé selon au moins l'une quelconque des revendications 11 à 19, **caractérisé en ce que** les particules sont fixées après l'application sur la couche inorganique poreuse par un chauffage unique à une température supérieure à la température de transition vitreuse, de manière à obtenir un début de fusion des particules, sans modification de la forme en soi.

21. Procédé selon au moins l'une quelconque des revendications 11 à 20, **caractérisé en ce qu'**on utilise, comme particules de mise hors service, celles qui sont choisies parmi les particules de polymères, de mélanges de polymères, de cires naturelles et/ou synthétiques.

22. Procédé selon la revendication 21, **caractérisé en ce qu'**on utilise, comme particules de mise hors service, des particules en cire de polyéthylène.

23. Utilisation d'un séparateur selon au moins l'une quelconque des revendications 1 à 10 comme séparateur dans des batteries au lithium.

24. Batterie, présentant un séparateur selon au moins l'une quelconque des revendications 1 à 10.
